(19) Europäisches Patentamt
European Patent Office
Office européen des brevets

(11) Veröffentlichungsnummer: **0 630 570 A2**

# (12) EUROPÄISCHE PATENTANMELDUNG

(21) Anmeldenummer: **94109021.9**

(22) Anmeldetag: **13.06.94**

(51) Int. Cl.5: **A01N 43/90**, //(A01N43/90, 43:653,59:00,47:04,47:38,47:20, 37:32,43:32,37:38,43:36,43:54, 37:50,47:12)

(30) Priorität: **25.06.93 DE 4321206**

(43) Veröffentlichungstag der Anmeldung: **28.12.94 Patentblatt 94/52**

(84) Benannte Vertragsstaaten: **BE CH DE ES FR GB GR IE IT LI NL PT**

(71) Anmelder: **BAYER AG**

**D-51368 Leverkusen (DE)**

(72) Erfinder: **Dehne, Heinz-Wilhelm, Dr.**
**Krischer Strasse 81**
**D-40789 Monheim (DE)**
Erfinder: **Lunkenheimer, Winfried,Dr.**
**Funckstrasse 49**
**D-42115 Wuppertal (DE)**

(54) **Fungizide Wirkstoffkombinationen.**

(57) Fungizide synergistische Wirkstoffkombinationen aus den bekannten 2-Cyanobenzimidazolen der Formel (I)

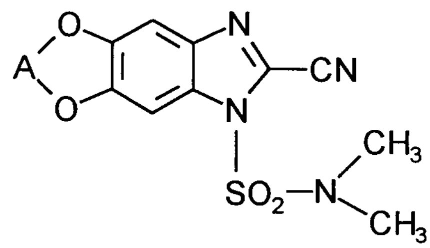

in welcher A die in der Beschreibung angegebenen Bedeutungen hat einerseits und bekannten fungiziden Wirkstoffen andererseits.

EP 0 630 570 A2

Die vorliegende Erfindung betrifft neue Wirkstoffkombinationen, die aus den bekannten 2-Cyanobenzimidazolen der Formel

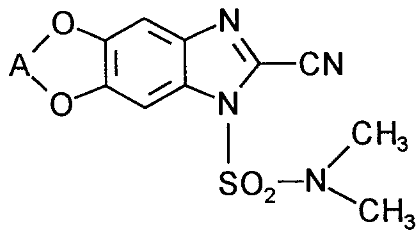

(I)

(I-1) A = $-CF_2-$
(I-2) A = $-CF_2-CF_2-$
einerseits und weiteren bekannten fungiziden Wirkstoffen andererseits bestehen und sehr gut zur Bekämpfung von Pilzen geeignet sind.

Es ist bereits bekannt, daß die 2-Cyanobenzimidazole der Formel (I) fungizide Eigenschaften besitzen (vgl. EP-OS 0 517 476). Die Wirksamkeit dieser Stoffe ist gut; sie läßt jedoch bei niedrigen Aufwandmengen in manchen Fällen zu wünschen übrig.

Ferner ist schon bekannt, daß zahlreiche Azol-Derivate, Arylbenzylether, Benzamide, Morpholin-Verbindungen und andere Heterocyclen zur Bekämpfung von Pilzen eingesetzt werden können (vgl. K.H. Büchel "Pflanzenschutz und Schädlingsbekämpfung", Seiten 140 bis 153, Georg Thieme Verlag, Stuttgart 1977, EP-OS 0 040 345, DE-OS 2 324 010, DE-OS 2 201 063, EP-OS 0 112 284, EP-OS 0 304 758 und DD-PS 140 412).

Ferner sind bekannt fungizide Wirkstoffkombinationen aus den 2-Cyanobenzimidazolen der Formel (I) und anderen bekannten fungiziden Wirkstoffen (vgl. EP-OS 0 517 476).

Die Wirksamkeit der bekannten fungiziden Wirkstoffe als Einzelverbindungen, ebenso wie die der bekannten synergistischen Wirkstoffkombinationen ist jedoch, insbesondere bei niedrigen Aufwandmengen, nicht immer in allen Anwendungsbereichen völlig zufriedenstellend.

Es wurde nun gefunden, daß die neuen Wirkstoffkombinationen aus den 2-Cyanobenzimidazolen der Formel

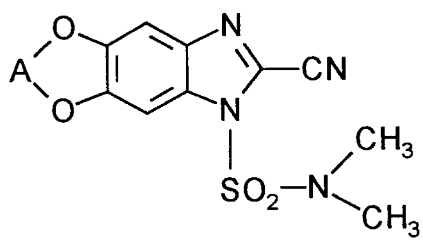

(I)

(I-1) A = $-CF_2-$
(I-2) A = $-CF_2-CF_2-$
und mindestens
(A) einem Azol-Derivat der Formel

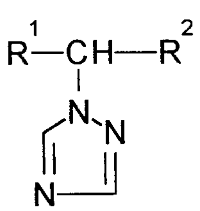

(II)

(II-1)

$R^1$ = 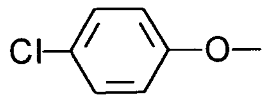 , $R^2$ = -CH(OH)-C(CH$_3$)$_3$

(TRIADIMENOL)

(II-2)

$R^1$ = 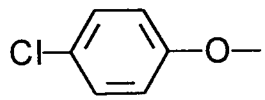 , $R^2$ = -CO-C(CH$_3$)$_3$

(TRIADIMEFON)

(II-3)

$R^1$ = 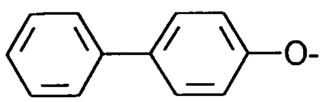 , $R^2$ = -CH(OH)-C(CH$_3$)$_3$

(BITERTANOL)

und/oder
(B) einem Azol-Derivat der Formel

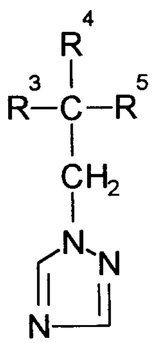

(III)

(III-1)

$R^3$ = 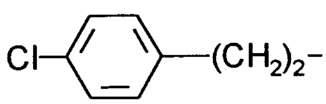 , $R^4$ = -C(CH$_3$)$_3$, $R^5$ = OH,

(TEBUCONAZOLE)

(III-2)

$R^3 =$ 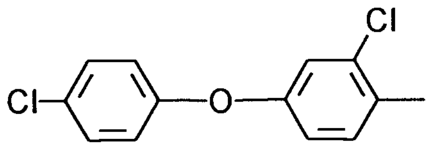 ,

$R^4$ und $R^5$ stehen gemeinsam für $-OCH_2CH(CH_3)O-$
(DIFENCONAZOLE)

(III-3)

$R^3 =$ 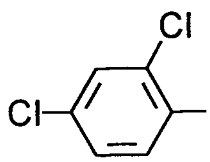 , $R^4 = -(CH_2)_3CH_3$, $R^5 = OH$

(HEXACONAZOLE)

(III-4)

$R^3 =$ 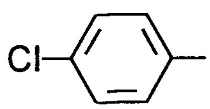 , $R^4 = -(CH_2)_3CH_3$, $R^5 = CN$

(MYCLOBUTANIL)

(III-5)

$R^3 =$ 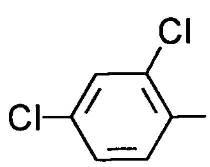 , $R^4 = -(CH_2)_3CH_3$, $R^5 = H$

(PENCONAZOLE)

und/oder
(C) dem Azol-Derivat der Formel

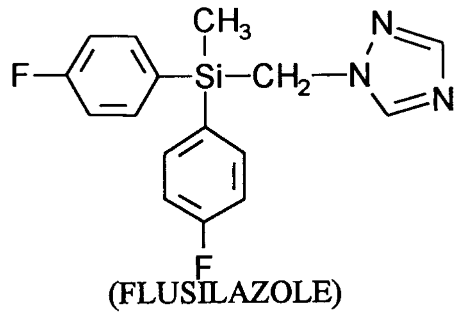

(IV)

(FLUSILAZOLE)

und/oder
(D) dem Azol-Derivat der Formel

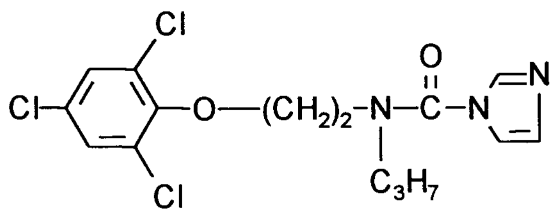

(V)

(PROCHLORAZ)

und/oder
(E) der Verbindung der Formel

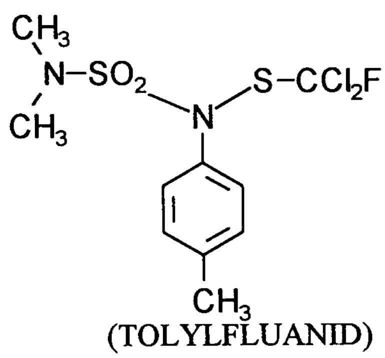

(VI)

(TOLYLFLUANID)

und/oder
(F) einer Verbindung der Formel

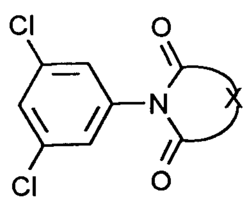

(VII)

(VII-1)

X = 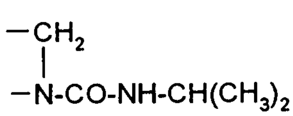

(IPRODIONE)

(VII-2)

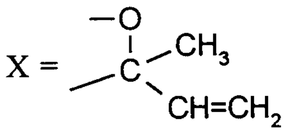

(VINCLOZOLIN)

(VII-3)

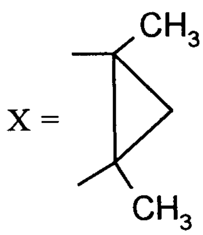

(PROCYMIDONE)

und/oder
(G) der Verbindung der Formel

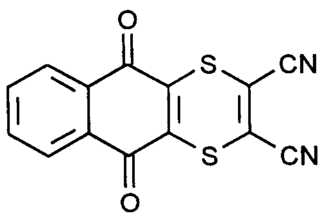

(VIII)

(DITHIANON)

und/oder
(H) der Verbindung der Formel

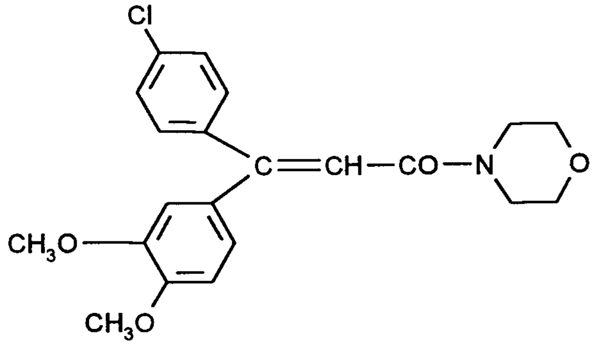

(IX)

(DIMETHOMORPH)

und/oder
(I) der Verbindung der Formel

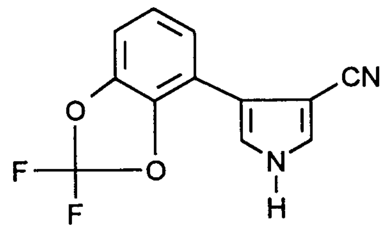

(X)

(FLUDIOXONIL)

und/oder

(K) einer Verbindung der Formel

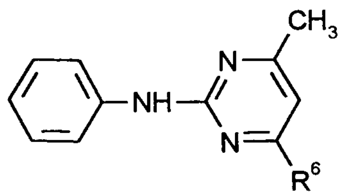

(XI)

(XI-1) $R^6$ = -C≡ C-$CH_3$

(MEPANIPYRIM)

(XI-2) $R^6$ = $CH_3$

(PYRIMETHANIL)

(XI-3)

$R^6$ =

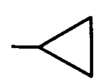

(CYPRODINYL)

und/oder

(L) der Verbindung der Formel

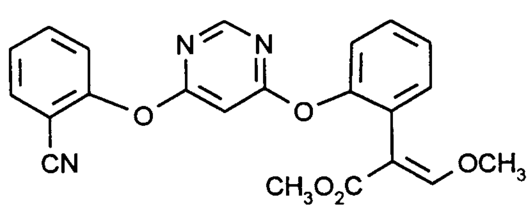

(XII)

und/oder

(M) der Verbindung der Formel

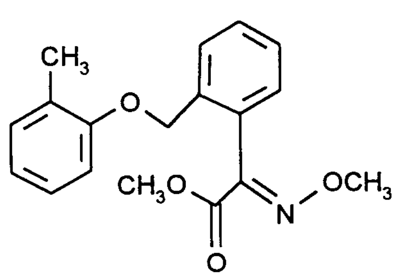

(XIII)

und/oder
(N) der Verbindung der Formel

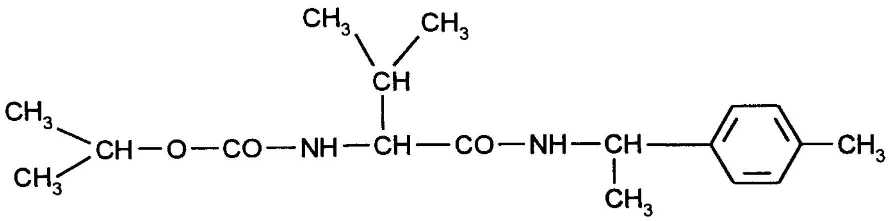

(XIV)

sehr gute fungizide Eigenschaften besitzen.

Überraschenderweise ist die fungizide Wirkung der erfindungsgemäßen Wirkstoffkombinationen wesentlich höher als die Summe der Wirkungen der einzelnen Wirkstoffe und auch wesentlich höher als die Wirkungen der bekannten Wirkstoffkombinationen. Es liegt also ein nicht vorhersehbarer synergistischer Effekt vor und nicht nur eine Wirkungsergänzung.

Die 2-Cyanobenzimidazole der Formel (I) und deren Einsatz als Fungizide sind bekannt (vgl. EP-OS 0 517 476).

Die in den erfindungsgemäßen Wirkstoffkombinationen außerdem vorhandenen fungiziden Komponenten sind ebenfalls bekannt. Im einzelnen werden die Wirkstoffe in folgenden Publikationen beschrieben:

(A) Verbindungen der Formel (II)
DE-OS 2 201 063
DE-OS 2 324 010
DE-OS 2 737 489
(B) Verbindungen der Formel (III)
DE-OS 3 018 866
DE-OS 2 551 560
EP 47 594
DE 2 735 872
(C) Verbindung der Formel (IV)
EP 68 813
US 4 496 551
(D) Verbindung der Formel (V)
DE-OS 2 429 523
DE-OS 2 856 974
US 4 108 411
(E), (G) Verbindung der Formel (VI) bzw. (VIII)
K.H. Büchel "Pflanzenschutz und Schädlingsbekämpfung
Georg Thieme Verlag, Stuttgart 1977
(F) Verbindungen der Formel (VII)
DE 2 207 576
US 3 903 090
US 3 755 350
US 3 823 240
(H) Verbindung der Formel (IX)
EP 219 756
(I) Verbindung der Formel (X)
EP 206 999
(K) Verbindungen der Formel (XI)
EP 270 111
EP 310 550
(L) Verbindung der Formel (XII)
EP 382 375
(M) Verbindung der Formel (XIII)
EP 515 901
(N) Verbindung der Formel (XIV)
EP 472 996

Die erfindungsgemäßen Wirkstoffkombinationen enthalten neben einem Wirkstoff der Formel (I) mindestens

einen Wirkstoff von den Verbindungen der Gruppen (A) bis (N). Sie können darüber hinaus auch weitere fungizid wirksame Zumischkomponenten enthalten.

Wenn die Wirkstoffe in den erfindungsgemäßen Wirkstoffkombinationen in bestimmten Gewichtsverhältnissen vorhanden sind, zeigt sich der synergistische Effekt besonders deutlich. Jedoch können die Gewichtsverhältnisse der Wirkstoffe in den Wirkstoffkombinationen in einem relativ großen Bereich variiert werden. Im allgemeinen entfallen auf 1 Gewichtsteil an Wirkstoff der Formel (I)

0,1 bis 50 Gewichtsteile, vorzugsweise
1 bis 20 Gewichtsteile an Wirkstoff aus der Gruppe (A),
0,1 bis 50 Gewichtsteile, vorzugsweise
1 bis 20 Gewichtsteile an Wirkstoff aus der Gruppe (B),
0,1 bis 50 Gewichtsteile, vorzugsweise
1 bis 20 Gewichtsteile an Wirkstoff aus der Gruppe (C),
0,1 bis 50 Gewichtsteile, vorzugsweise
1 bis 20 Gewichtsteile an Wirkstoff aus der Gruppe (D),
1 bis 200 Gewichtsteile, vorzugsweise
1 bis 50 Gewichtsteile an Wirkstoff aus der Gruppe (E),
0,1 bis 50 Gewichtsteile, vorzugsweise
1 bis 20 Gewichtsteile an Wirkstoff aus der Gruppe (F),
1 bis 200 Gewichtsteile, vorzugsweise
1 bis 50 Gewichtsteile an Wirkstoff aus der Gruppe (G),
0,1 bis 50 Gewichtsteile, vorzugsweise
1 bis 20 Gewichtsteile an Wirkstoff aus der Gruppe (H),
0,1 bis 50 Gewichtsteile, vorzugsweise
1 bis 20 Gewichtsteile an Wirkstoff aus der Gruppe (I),
0,1 bis 50 Gewichtsteile, vorzugsweise
1 bis 20 Gewichtsteile an Wirkstoff aus der Gruppe (K),
0,1 bis 50 Gewichtsteile, vorzugsweise
1 bis 20 Gewichtsteile an Wirkstoff aus der Gruppe (L),
0,1 bis 50 Gewichtsteile, vorzugsweise
1 bis 20 Gewichtsteile an Wirkstoff aus der Gruppe (M).
0,1 bis 50 Gewichtsteile, vorzugsweise
1 bis 20 Gewichtsteile an Wirkstoff der Gruppe (N).

Die erfindungsgemäßen Wirkstoffkombinationen besitzen sehr gute fungizide Eigenschaften. Sie lassen sich vor allem zur Bekämpfung von phytopathogenen

Pilzen, wie Plasmodiophoromycetes, Oomycetes, Chytridiomycetes, Zygomycetes, Ascomycetes, Basidiomycetes, Deuteromycetes usw. einsetzen.

Die erfindungsgemäßen Wirkstoffkombinationen eignen sich besonders gut zur Bekämpfung von Getreidekrankheiten, wie Erysiphe, Cochliobolus, Pyrenophora und Leptosphaeria, und gegen Pilzbefall an Gemüse, Wein und Obst, beispielsweise gegen Venturia oder Podosphaera an Äpfeln, Botrytis an Bohnen und Phytophthora an Tomaten.

Die gute Pflanzenverträglichkeit der Wirkstoffkombinationen in den zur Bekämpfung von Pflanzenkrankheiten notwendigen Konzentrationen erlaubt eine Behandlung von oberirdischen Pflanzenteilen, von Pflanz- und Saatgut, und des Bodens.

Die erfindungsgemäßen Wirkstoffkombinationen können in die üblichen Formulierungen übergeführt werden, wie Lösungen, Emulsionen, Suspensionen, Pulver, Schäume, Pasten, Granulate, Aerosole, Feinstverkapselungen in polymeren Stoffen und in Hüllmassen für Saatgut, sowie ULV-Formulierungen.

Diese Formulierungen werden in bekannter Weise hergestellt, z.B. durch Vermischen der Wirkstoffe mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol oder Alkylnaphthaline, chlorierte Aromaten oder chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, Alkohole, wie Butanol oder Glycol sowie deren Ether und Ester, Ketone, wie Aceton, Methylethylketon, Methylisobutylketon oder Cyclohexanon, stark polare Lösungsmittel, wie Dimethylformamid und Dimethylsulfoxid, sowie Wasser. Mit verflüssigten gasförmigen Streckmitteln oder Trägerstoffen sind solche Flüssigkeiten gemeint, welche bei normaler Temperatur und unter Normaldruck gasförmig sind, z.B. Aerosol-Treibgase, wie Halogenkohlenwasserstoffe, sowie Butan, Propan, Stickstoff und Kohlendioxid. Als feste Trägerstoffe kommen in Frage: z.B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate. Als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengel. Als Emulgier- und/oder schaumerzeugende Mittel kommen in Frage: z.B. nichtionogene und anionische Emulgatoren, wie Polyoxyethylen-Fettsäureester, Polyoxyethylen-Fettalkoholether, z.B. Alkylarylpolyglycol-ether, Alkylsulfonate, Alkylsulfate, Arylsulfonate sowie Eiweißhydrolysate. Als Dispergiermittel kommen in Frage: z.B. Lignin-Sulfitablaugen und Methylcellulose.

Es können in den Formulierungen Haftmittel wie Carboxymethylcellulose, natürliche und synthetische pulverige, körnige oder latexförmige Polymere verwendet werden, wie Gummiarabicum, Polyvinylalkohol, Polyvinylacetat, sowie natürliche Phospholipide, wie Kephaline und Lecithine, und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe, wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoff, vorzugsweise zwischen 0,5 und 90 %.

Die erfindungsgemäßen Wirkstoffkombinationen können in den Formulierungen in Mischung mit anderen bekannten Wirkstoffen vorliegen, wie Fungizide, Insektizide, Akarizide und Herbizide, sowie in Mischungen mit Düngemitteln oder Pflanzenwachstumsregulatoren.

Die Wirkstoffkombinationen können als solche, in Form ihrer Formulierungen oder den daraus bereiteten Anwendungsformen, wie gebrauchsfertige Lösungen, emulgierbare Konzentrate, Emulsionen, Suspensionen, Spritzpulver, lösliche Pulver und Granulate, angewendet werden.

Die Anwendung geschieht in üblicher Weise, z.B. durch Gießen, Verspritzen, Versprühen, Verstreuen, Verstreichen, Trockenbeizen, Feuchtbeizen, Naßbeizen, Schlämmbeizen oder Inkrustieren.

Bei der Behandlung von Pflanzenteilen können die Wirkstoffkonzentrationen in den Anwendungsformen in einem größeren Bereich variiert werden. Sie liegen im allgemeinen zwischen 1 und 0,0001 Gew.-%, vorzugsweise zwischen 0,5 und 0,001 %.

Bei der Saatgutbehandlung werden im allgemeinen Wirkstoffmengen von 0,001 bis 50 g je Kilogramm Saatgut, vorzugsweise 0,01 bis 10 g benötigt.

Bei Behandlung des Bodens sind Wirkstoffkonzentrationen von 0,00001 bis 0,1 Gew.-%, vorzugsweise von 0,0001 bis 0,02 Gew.-%, am Wirkungsort erforderlich.

Die gute fungizide Wirkung der erfindungsgemäßen Wirkstoffkombinationen geht aus den nachfolgenden Beispielen hervor. Während die einzelnen Wirkstoffe oder die bekannten Wirkstoffkombinationen in der fungiziden Wirkung Schwächen aufweisen, geht aus den Tabellen der folgenden Beispiele eindeutig hervor, daß die gefundene Wirkung der erfindungsgemäßen Wirkstoffkombinationen größer ist als Summe der Wirkungen der einzelnen Wirkstoffe (Synergismus) und auch größer als die Wirkungen der bekannten Wirkstoffkombinationen.

Ein synergistischer Effekt liegt bei Fungiziden immer dann vor, wenn die fungizide Wirkung der Wirkstoffkombinationen größer ist als die Summe der Wirkungen der einzelnen applizierten Wirkstoffe.

Die zu erwartende Wirkung für eine gegebene Kombination zweier Wirkstoffe kann (vgl. Colby, S.R., "Calculating Synergistic and Antagonistic Responses of Herbicide Combinations", Weeds 15, Seiten 20-22. 1967) wie folgt berechnet werden:

Wenn

- X den Wirkungsgrad, ausgedrückt in % der unbehandelten Kontrolle, beim Einsatz des Wirkstoffes A in einer Konzentration von $\underline{m}$ ppm,
- Y den Wirkungsgrad, ausgedrückt in % der unbehandelten Kontrolle, beim Einsatz des Wirkstoffes B in einer Konzentration von $\underline{n}$ ppm,
- E den Wirkungsgrad, ausgedrückt in % der unbehandelten Kontrolle, beim Einsatz der Wirkstoffe A und B in Konzentrationen von $\underline{m}$ und $\underline{n}$ ppm bedeutet,

dann ist

$$E = X + Y - \frac{X \cdot Y}{100}$$

Ist die tatsächliche fungizide Wirkung größer als berechnet, so ist die Kombination in ihrer Wirkung überadditiv, d.h. es liegt ein synergistischer Effekt vor. In diesem Fall muß der tatsächlich beobachtete Wirkungsgrad größer sein als der aus der oben angeführten Formel errechnete Wert für den erwarteten Wirkungsgrad (E).

**Beispiel 1**

Phytophthora-Test (Tomate) / protektiv

Zur Herstellung einer zweckmäßigen Wirkstoffzubereitung werden handelsübliche Wirkstoff-Formulierungen (einzelne Wirkstoffe oder Wirkstoffkombinationen) mit Wasser auf die jeweils gewünschte Konzentration verdünnt.

Zur Prüfung auf protektive Wirksamkeit bespritzt man junge Pflanzen mit der Wirkstoffzubereitung bis zur Tropfnässe. Nach Antrocknen des Spritzbelages werden die Pflanzen mit einer wäßrigen Sporensuspension von Phytophthora infestans inokuliert.

Die Pflanzen werden in einer Inkubationskabine mit 100 % relativer Luftfeuchtigkeit und ca. 20 °C aufgestellt.

3 Tage nach der Inokulation erfolgt die Auswertung.

Wirkstoffe, Wirkstoffkonzentrationen und Versuchsergebnisse gehen aus der folgenden Tabelle hervor.

Tabelle 1

Phytophthora-Test (Tomate) / protektiv

| Wirkstoffe | Wirkstoffkonzentration in ppm | Wirkungsgrad in % der unbehandelten Kontrolle |
|---|---|---|
| Vorbekannte Mischung:<br>(I-1)<br>+<br>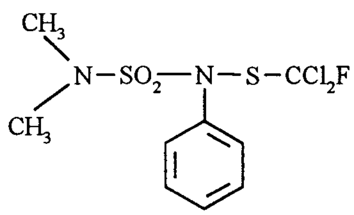 | 0,5<br>+<br>4 | 53 |
| Erfindungsgemäße Mischung:<br>(I-1)<br>+<br>(VI) | 0,5<br>+<br>4 | 86 |

Tabelle 1 (Fortsetzung)
*Phytophthora-Test (Tomate) / protektiv*

| Wirkstoffe | Wirkstoffkonzentration in ppm | Wirkungsgrad in % der unbehandelten Kontrolle |
|---|---|---|
| Vorbekannte Mischungen:<br>(I-2)<br>+<br>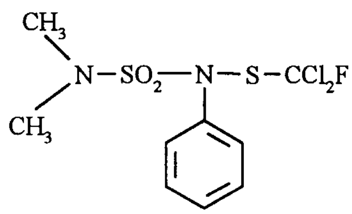 | 0,5<br>+<br>4 | 78 |
| (I-2)<br>+<br>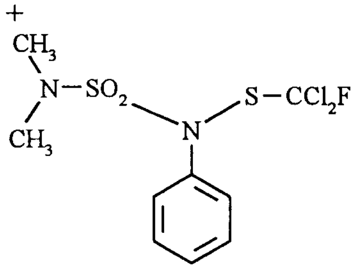 | 0,25<br>+<br>2 | 36 |

Tabelle 1 (Fortsetzung)

Phytophthora-Test (Tomate) / protektiv

| Wirkstoffe | Wirkstoffkonzentration in ppm | Wirkungsgrad in % der unbehandelten Kontrolle |
|---|---|---|
| erfindungsgemäße Mischungen<br>(I-2)<br>+<br>(VI) | 0,5<br>+<br>4 | 86 |
| (I-2)<br>+<br>(VI) | 0,25<br>+<br>2 | 72 |

Tabelle 1 (Fortsetzung)

Phytophthora-Test (Tomate) / protektiv

| Wirkstoffe | Wirkstoffkonzentration in ppm | Wirkungsgrad in % der unbehandelten Kontrolle |
|---|---|---|
| (I-1) 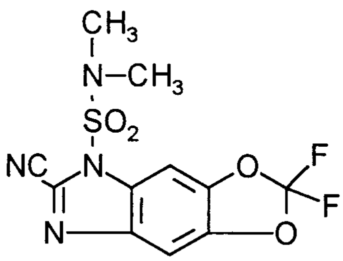 | 0,5 | 57 |
| (VII-3) 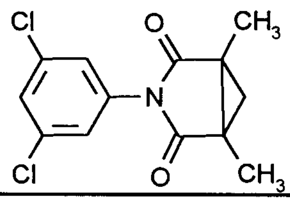 | 4 | 0 |
| erfindungsgemäße Mischung<br>(I-1)<br>+<br>(VII-3) | 0,5<br>+<br>4 | ber. 57*<br>gef. 88** |

*Erwartungswert, berechnet nach der Colby-Formel (s.o.)

**gefunden

Tabelle 1 (Fortsetzung)

Phytophthora-Test (Tomate) / protektiv

| Wirkstoffe | Wirkstoffkonzentration in ppm | Wirkungsgrad in % der unbehandelten Kontrolle |
|---|---|---|
| (I-1) 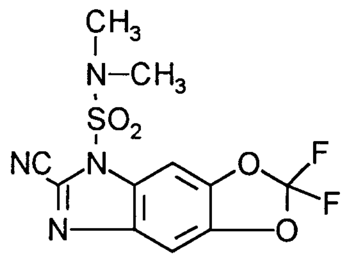 | 0,5 | 57 |
| (VII-1) 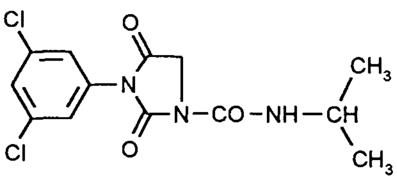 | 4 | 0 |
| erfindungsgemäße Mischung<br>(I-1)<br>+<br>(VII-1) | 0,5<br>+<br>4 | ber. 57*<br>gef. 65** |

*Erwartungswert, berechnet nach der Colby-Formel (s.o.)

** gefunden

Tabelle 1 (Fortsetzung)

Phytophthora-Test (Tomate) / protektiv

| Wirkstoffe | Wirkstoffkonzentration in ppm | Wirkungsgrad in % der unbehandelten Kontrolle |
| --- | --- | --- |
| (I-1) 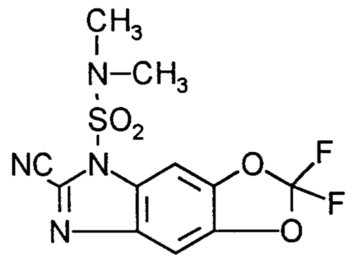 | 0,5 | 57 |
| (VII-2) 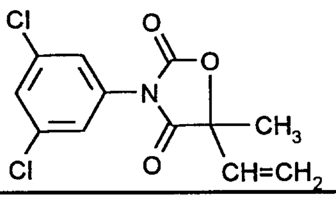 | 4 | 0 |
| erfindungsgemäße Mischung<br>(I-1)<br>+<br>(VII-2) | 0,5<br>+<br>4 | ber. 57*<br>gef. 67** |

*Erwartungswert, berechnet nach der Colby-Formel (s.o.)

** gefunden

Tabelle 1 (Fortsetzung)

Phytophthora-Test (Tomate) / protektiv

| Wirkstoffe | Wirkstoffkonzentration in ppm | Wirkungsgrad in % der unbehandelten Kontrolle |
|---|---|---|
| (I-2) 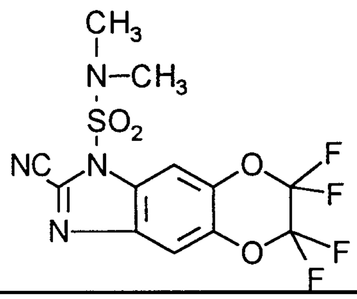 | 0,25 | 36 |
| 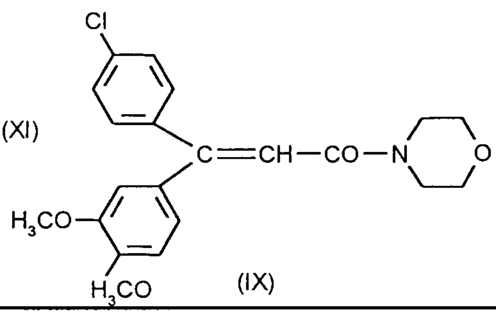 (XI) (IX) | 0,25 | 12 |
| erfindungsgemäße Mischung<br>(I-2)<br>+<br>(IX) | 0,25<br>+<br>0,25 | ber. 44*<br>gef. 75** |

*Erwartungswert, berechnet nach der Colby-Formel (s.o.)

**gefunden

Tabelle 1 (Fortsetzung)

Phytophthora-Test (Tomate) / protektiv

| Wirkstoffe | Wirkstoffkonzentration in ppm | Wirkungsgrad in % der unbehandelten Kontrolle |
|---|---|---|
| (I-2) 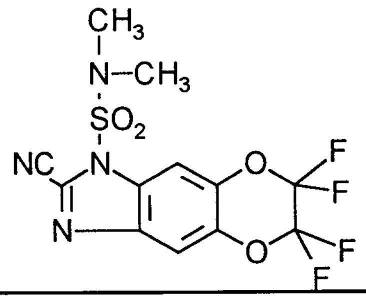 | 0,25 | 36 |
| (VII-3) 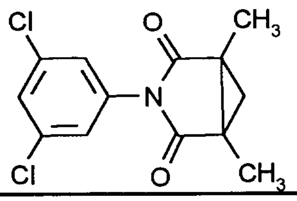 | 2 | 0 |
| erfindungsgemäße Mischung<br>(I-2)<br>+<br>(VII-3) | 0,25<br>+<br>2 | ber. 36*<br><br>gef. 90* |

*Erwartungswert, berechnet nach der Colby-Formel (s.o.)

**gefunden

T a b e l l e 1 (Fortsetzung)

Phytophthora-Test (Tomate) / protektiv

| Wirkstoffe | Wirkstoffkonzentration in ppm | Wirkungsgrad in % der unbehandelten Kontrolle |
|---|---|---|
| (I-2) 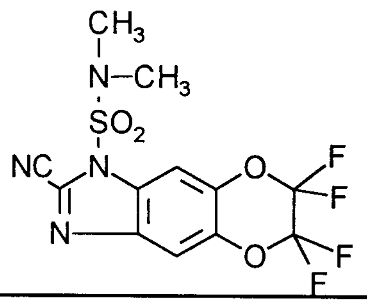 | 0,25 | 36 |
| (VII-1) 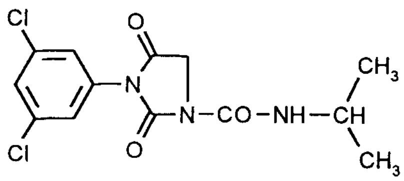 | 2 | 0 |
| erfindungsgemäße Mischung (I-2) + (VII-1) | 0,25 + 2 | ber. 36* gef. 92** |

*Erwartungswert, berechnet nach der Colby-Formel (s.o.)

**gefunden

T a b e l l e 1 (Fortsetzung)

Phytophthora-Test (Tomate) / protektiv

| Wirkstoffe | Wirkstoffkonzentration in ppm | Wirkungsgrad in % der unbehandelten Kontrolle |
| --- | --- | --- |
| (I-2) 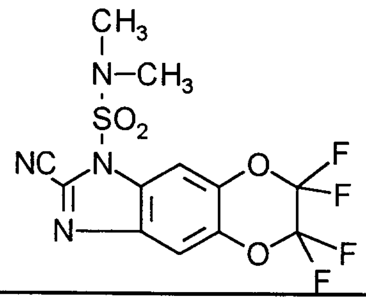 | 0,25 | 36 |
| (VII-2) 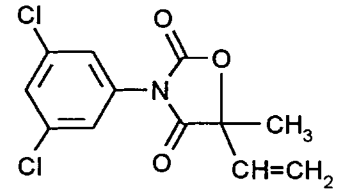 | 2 | 0 |
| erfindungsgemäße Mischung (I-2) + (VII-2) | 0,25 + 2 | ber. 36* gef. 90** |

*Erwartungswert, berechnet nach der Colby-Formel (s.o.)

**gefunden

**Beispiel 2**

Botrytis-Test (Bohne) / protektiv

Zur Herstellung einer zweckmäßigen Wirkstoffzubereitung werden handelsübliche Wirkstoff-Formulierungen (einzelne Wirkstoffe oder Wirkstoffkombinationen) mit Wasser auf die jeweils gewünschte Konzentration verdünnt.

Zur Prüfung auf protektive Wirksamkeit bespritzt man junge Pflanzen mit der Wirkstoffzubereitung bis zur Tropfnässe. Nach Antrocknen des Spritzbelages werden auf jedes Blatt 2 Kleine mit Botrytis cinerea bewachsene Agarstückchen aufgelegt. Die inokulierten Pflanzen werden in einer abgedunkelten, feuchten Kammer bei 20 °C aufgestellt.

3 Tage nach der Inokulation wird die Größe der Befallsflecken auf den Blättern ausgewertet.

Um Synergismus zwischen den in diesem Versuch verwendeten Wirkstoffen aufzuzeigen, wurden die Resultate nach der von Colby beschriebenen Methode (s.o.) ausgewertet.

Wirkstoffe, Wirkstoffkonzentrationen und Versuchsergebnisse gehen aus der folgenden Tabelle hervor.

Tabelle 2

Botrytis-Test (Bohne) / protektiv

| Wirkstoffe | Wirkstoffkonzentration in ppm | Wirkungsgrad in % der unbehandelten Kontrolle |
|---|---|---|
| (I-2) 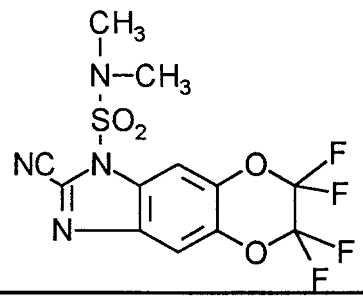 | 2 | 0 |
| (VII-3) 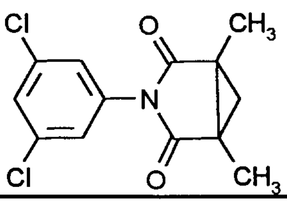 | 20 | 17 |
| erfindungsgemäße Mischung<br>(I-2)<br>+<br>(VII-3) | 2<br>+<br>20 | ber. 17*<br>gef. 44** |

*Erwartungswert, berechnet nach der Colby-Formel (s.o.)

**gefunden

<u>T a b e l l e 2</u> (Fortsetzung)

Botrytis-Test (Bohne) / protektiv

| Wirkstoffe | Wirkstoffkonzentration in ppm | Wirkungsgrad in % der unbehandelten Kontrolle |
|---|---|---|
| (I-2) 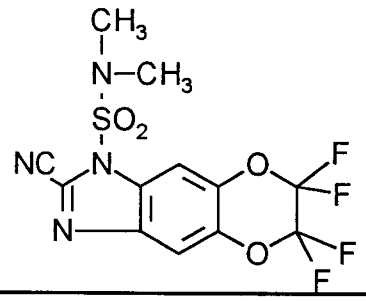 | 2 | 0 |
| (VII-1) 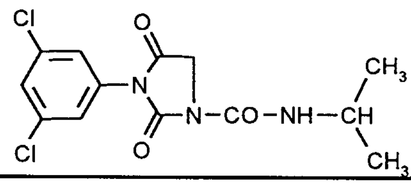 | 20 | 49 |
| <u>erfindungsgemäße Mischung</u><br>(I-2)<br>+<br>(VII-1) | 2<br>+<br>20 | ber. 49*<br><br>gef. 64** |

*Erwartungswert, berechnet nach der Colby-Formel (s.o.)

**gefunden

T a b e l l e 2 (Fortsetzung)

Botrytis-Test (Bohne) / protektiv

| Wirkstoffe | Wirkstoffkonzentration in ppm | Wirkungsgrad in % der unbehandelten Kontrolle |
|---|---|---|
| (I-2) 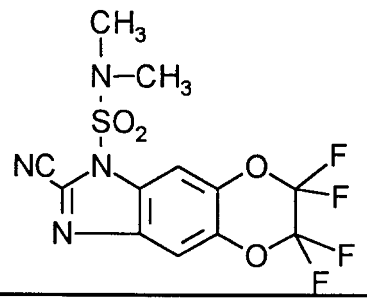 | 2 | 0 |
| (VII-2) 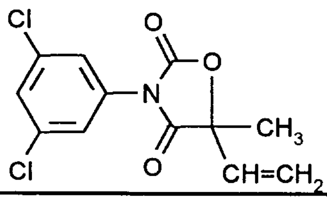 | 20 | 24 |
| erfindungsgemäße Mischung (I-2) + (VII-2) | 2 + 20 | ber. 24* gef. 41** |

*Erwartungswert, berechnet nach der Colby-Formel (s.o.)

**gefunden

**Patentansprüche**

1. Fungizide Mittel, gekennzeichnet durch einen Gehalt an einer Wirkstoffkombination bestehend aus einer Verbindung der Formel

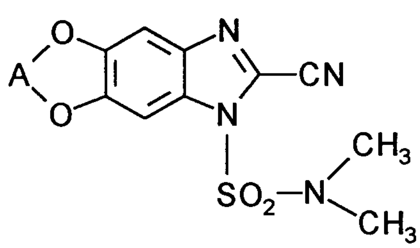

(I)

(I-1) A = $-CF_2-$

(I-2) A = $-CF_2CF_2-$

und mindestens

(A) einem Azol-Derivat der Formel

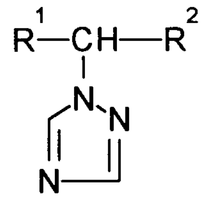

(II)

(II-1)

$R^1$ = 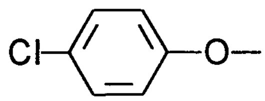 , $R^2$ = $-CH(OH)-C(CH_3)_3$

(TRIADIMENOL)

(II-2)

$R^1$ = 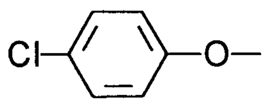 , $R^2$ = $-CO-C(CH_3)_3$

(TRIADIMEFON)

(II-3)

$R^1$ = 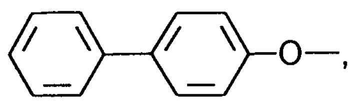, $R^2$ = $-CH(OH)-C(CH_3)_3$

(BITERTANOL)

und/oder

(B) einem Azol-Derivat der Formel

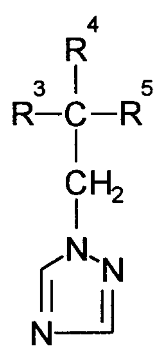

(III)

(III-1)

$R^3$ = 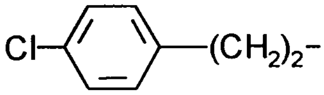 , $R^4$ = $-C(CH_3)_3$, $R^5$ = OH,

(TEBUCONAZOLE)

(III-2)

$R^3$ = 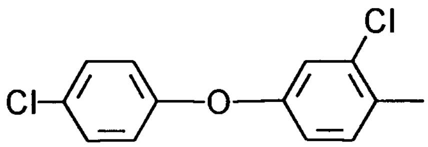 ,

$R^4$ und $R^5$ stehen gemeinsam für $-OCH_2CH(CH_3)O-$
(DIFENCONAZOLE)

(III-3)

$R^3$ = 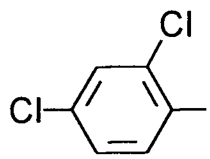 , $R^4$ = $-(CH_2)_3CH_3$, $R^5$ = OH

(HEXACONAZOLE)

(III-4)

$R^3$ = 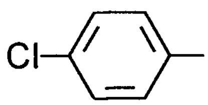 , $R^4$ = $-(CH_2)_3CH_3$, $R^5$ = CN

(MYCLOBUTANIL)

(III-5)

$R^3$ = 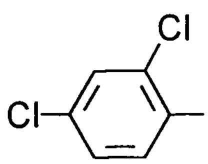 , $R^4$ = $-(CH_2)_3CH_3$, $R^5$ = H

(PENCONAZOLE)

und/oder

(C) dem Azol-Derivat der Formel

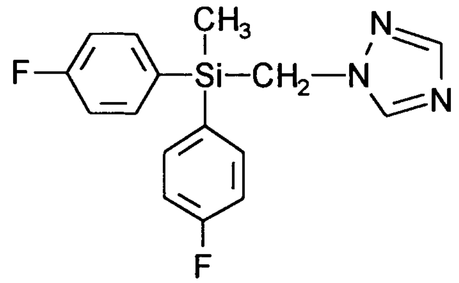

(IV)

(FLUSILAZOLE)

und/oder
(D) dem Azol-Derivat der Formel

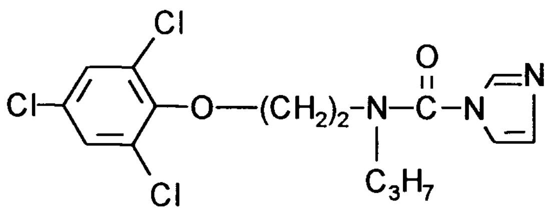

(V)

(PROCHLORAZ)

und/oder
(E) der Verbindung der Formel

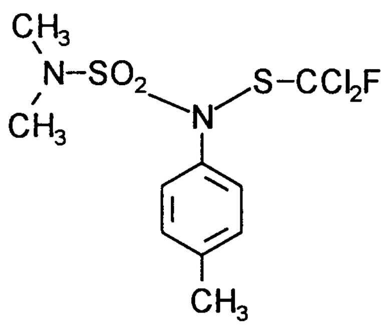

(VI)

(TOLYLFLUANID)

und/oder
(F) einer Verbindung der Formel

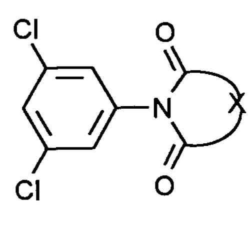

(VII)

(VII-1)

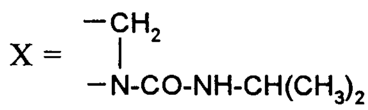

(IPRODIONE)

(VII-2)

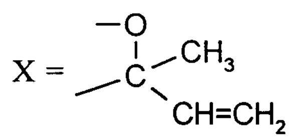

(VINCLOZOLIN)

(VII-3)

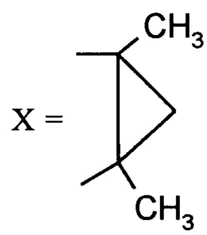

(PROCYMIDONE)

und/oder

(G) der Verbindung der Formel

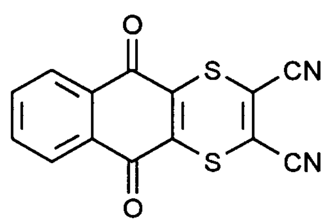

(VIII)

(DITHIANON)

und/oder

(H) der Verbindung der Formel

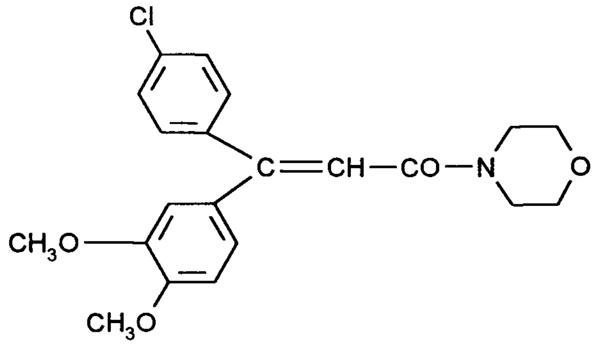

(IX)

(DIMETHOMORPH)

und/oder
(I) der Verbindung der Formel

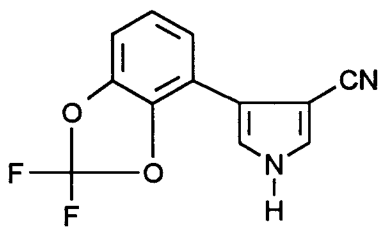

(X)

(FLUDIOXONIL)

und/oder
(K) einer Verbindung der Formel

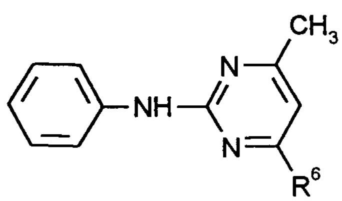

(XI)

(XI-1) $R^6$ = $-C\equiv C-CH_3$
(MEPANIPYRIM)
(XI-2) $R^6$ = $CH_3$
(PYRIMETHANIL)
(XI-3)

$R^6$ = 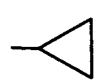

(CYPRODINYL)

und/oder

(L) der Verbindung der Formel

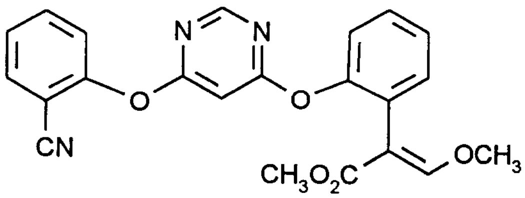

(XII)

und/oder
(M) der Verbindung der Formel

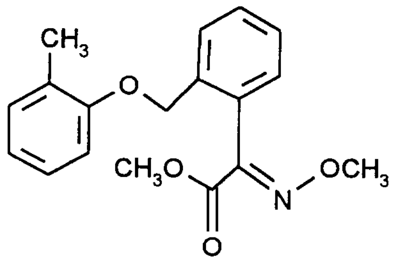

(XIII)

und/oder
(N) der Verbindung der Formel

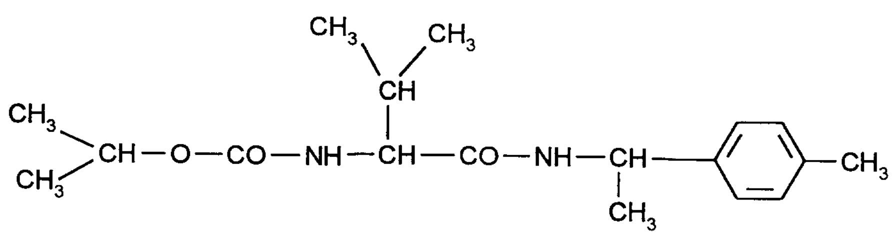

(XIV)

2. Mittel gemäß Anspruch 1, dadurch gekennzeichnet, daß in den Wirkstoffkombinationen auf 1 Gewichtsteil an Wirkstoff der Formel (I)
0,1 bis 50 Gewichtsteile an Wirkstoff aus der Gruppe (A) entfallen,
0,1 bis 50 Gewichtsteile an Wirkstoff aus der Gruppe (B) entfallen,
0,1 bis 50 Gewichtsteile an Wirkstoff aus der Gruppe (C) entfallen,
0,1 bis 50 Gewichtsteile an Wirkstoff aus der Gruppe (D) entfallen,
1 bis 200 Gewichtsteile an Wirkstoff aus der Gruppe (E) entfallen,
0,1 bis 50 Gewichtsteile an Wirkstoff aus der Gruppe (F) entfallen,
1 bis 200 Gewichtsteile an Wirkstoff aus der Gruppe (G) entfallen,
0,1 bis 50 Gewichtsteile an Wirkstoff aus der Gruppe (H) entfallen,
0,1 bis 50 Gewichtsteile an Wirkstoff aus der Gruppe (I) entfallen,
0,1 bis 50 Gewichtsteile an Wirkstoff aus der Gruppe (K) entfallen,
0,1 bis 50 Gewichtsteile an Wirkstoff aus der Gruppe (L) entfallen,
0,1 bis 50 Gewichtsteile an Wirkstoff aus der Gruppe (M) entfallen und
0,1 bis 50 Gewichtsteile an Wirkstoff aus der Gruppe (N) entfallen.

3. Verfahren zur Bekämpfung von Pilzen, dadurch gekennzeichnet, daß man Wirkstoffkombinationen gemaß Anspruch 1 auf die Pilze und/oder deren Lebensraum einwirken läßt.

4. Verwendung von Wirkstoffkombinationen gemäß Anspruch 1 zur Bekämpfung von Pilzen.

5. Verfahren zur Herstellung von fungiziden Mitteln, dadurch gekennzeichnet, daß man Wirkstoffkombinationen gemäß Anspruch 1 mit Streckmitteln und/oder oberflächenaktiven Stoffen vermischt.